Europäisches Patentamt

European Patent Office

Office européen des brevets

(19)

(11) EP 0 678 082 B1

(12) FASCICULE DE BREVET EUROPEEN

(45) Date de publication et mention
de la délivrance du brevet:
**15.07.1998 Bulletin 1998/29**

(21) Numéro de dépôt: **94903933.3**

(22) Date de dépôt: **03.01.1994**

(51) Int Cl.⁶: **C04B 28/00**, C04B 28/10,
A47B 96/20, C04B 16/02,
C04B 18/24, C04B 18/28,
C04B 30/02

(86) Numéro de dépôt international:
**PCT/FR94/00001**

(87) Numéro de publication internationale:
**WO 94/15885 (21.07.1994 Gazette 1994/17)**

(54) **PROCEDE CHIMIQUE POUR LA FABRICATION D'UN MATERIAU DE CONSTRUCTION ET D'AMEUBLEMENT**

CHEMISCHES VERFAHREN ZUR HERSTELLUNG EINES MATERIALS FÜR DIE KONSTRUKTION VON BAUWERKEN UND MÖBLEN

CHEMICAL PROCESS FOR THE MANUFACTURE OF BUILDING AND FURNISHING MATERIALS

(84) Etats contractants désignés:
**AT BE CH DE DK ES GB IT LI NL SE**

(30) Priorité: **05.01.1993 FR 9300016**

(43) Date de publication de la demande:
**25.10.1995 Bulletin 1995/43**

(73) Titulaire: **DECROS, Raymond
F-69630 Chaponost (FR)**

(72) Inventeur: **DECROS, Raymond
F-69630 Chaponost (FR)**

(74) Mandataire: **Kédinger, Jean-Paul et al
Cabinet Malemont
42, avenue du Président Wilson
75116 Paris (FR)**

(56) Documents cités:
**EP-A- 0 254 501        DE-C- 720 493
FR-A- 2 436 117          GB-A- 537 683
GB-A- 2 090 301**

- **CHEMICAL ABSTRACTS, vol. 89, no. 24, 11 Décembre 1978, Columbus, Ohio, US; abstract no. 203064j, N. KITAMURA ET AL 'Multi-color decorative coating materials for building materials' page 338 ; & JP,A,7 877 229 (...) 8 Juillet 1978**

## Description

La présente invention concerne un procédé chimique permettant d'obtenir des matériaux caractérisés par leurs importantes propriétés ignifuges, isolantes phoniquement et thermiquement, de très fortes propriétés mécaniques faciles à travailler dans l'industrie du Bâtiment et de l'Ameublement.

Les techniques utilisées à ce jour, pour fabriquer des matériaux pour l'Industrie du Bâtiment et de substitut du bois dans l'Ameublement, partent de la mise en oeuvre de plâtre, de papiers usagés ou de papiers cartons, de plaquages combinés plâtre-mousses organiques ou fibres minérales, de fibres végétales, de résidus de bois, de résines expansées... Certaines publications récentes font état de l'utilisation de boues industrielles pour réaliser des plaques, panneaux dans l'industrie du Bâtiment. Ainsi, il est décrit dans le document GB -A- 2 090 301 A un procédé connu au cours du quel les boues d'hydroxyde d'Aluminium provenant d'un procédé d'anodisation de ce métal sont alcalinisées pour donner un aluminate soluble. Dans ce procédé connu, l'utilisation de chaux n'est pas possible à ce stade du procédé, étant donné que 1' aluminate de calcium est insoluble, contrairement à ce qui est décrit dans ce document - page 2, ligne 14. Ce procédé, au contraire, détourne l'homme de métier d'un procédé faisant intervenir la chaux et est totalement différent du procédé de la présente invention consistant à réaliser une réaction chimique à partir de la chaux sur de vieux papiers ou cartons ou boues primaires de papeterie ; réaction permettant de former une alcali-cellulose ou une lignine alcaline insoluble. Au cours de la deuxième étape du procédé connu des fibres cellulosiques provenant de papiers broyés, sont ajoutées à la solution d'aluminate alcaline. Puis, cette suspension est additionnée d'un acide faible dans le but d'obtenir un pH acide et favoriser ainsi l'action d'un floculant, type sulfate d'Aluminium rajouté en fin de mélange. Il ne peut s'agir d'un procédé semblable à la présente invention où la deuxième étape réactionnelle est l'ajout d'un sel d'acide fort et de base faible, ou d'un sel d'acide fort et de base forte. Dans la présente invention, une réaction chimique par action du sulfate d'alumine sur l'alcali-cellulose ou sur la lignine alcaline donne de nouveaux composés, inconnus à ce jour : le ligno-cellulo-sulfoaluminate de calcium ou le ligno-cellulo-carbonate de calcium ou autres sels métalliques alcalins. Le document FR-A-2 436 117 décrit un procédé dont la première étape est l'action de la chaux vive sur de la tourbe broyée suivant une technique non humide donc sans présence de chaux éteinte. Lors d'une deuxième étape, le sulfate d'alumine est ajouté au mélange précédent, tout en restant en milieu très légèrement humidifié. En aucun cas, il ne s'agit d'aboutir suivant cet enseignement, à la formation de ligno-cellulo-sulfoaluminate alcalin ou autres sels métalliques dérivés de la cellulose ou de la lignine et issus d'une réaction chimique en voie humide. Au contraire, ce procédé connu suggère d'utiliser de la tourbe, de la chaux vive et du sulfate d'alumine pour donner, après léger humectage et pressage, un produit destiné à remplacer le bois et non pas comme dans la présente invention, de sels alcalins de cellulose ou de lignine. Les produits obtenus à partir de ces techniques ne possèdent qu'en partie des propriétés ignifuges, isolantes phoniques et thermiques et ne sont pas insensibles aux micro-organismes comme c'est le cas pour les nouveaux produits : ligno-cellulo-sulfoaluminate de calcium ou ligno-cellulo-carbonate de calcium qui sont à la base de matériaux utilisables dans le Bâtiment ou l'Industrie du meuble. Les déchets provenant des matériaux réalisés à partir de la présente invention peuvent être eux aussi recyclés et être mis en oeuvre en début du présent procédé.

La présente invention concerne un procédé pour la fabrication d'un matériau de construction ou d'ameublement, caractérisé en ce qu'il consiste à réaliser une suspension de fibres de cellulose, de déchets cellulosiques ou de boues primaires de papeterie dans de l'eau ; à mélanger à cette suspension de la chaux ; à y ajouter une solution d'au moins un sel de métal mono ou trivalent puis à filtrer et sécher la suspension résultante pour obtenir le matériau de construction ou d'ameublement.

L'invention concerne également un procédé pour la fabrication d'un matériau de construction ou d'ameublement, caractérisé en ce qu'il consiste à réaliser une suspension de fibres de cellulose, de déchets cellulosiques ou de boues primaires de papeterie dans de l'eau ; à y ajouter un sulfate de métal trivalent puis du carbonate monosodique ; puis à filtrer et sécher la suspension résultante pour obtenir le matériau de construction ou d'ameublement.

L'invention concerne en outre un matériau de construction et d'ameublement obtenu par les procédés ci-dessus, ayant de bonnes propriétés mécaniques, ignifuges et d'isolation thermique et phonique.

Il est à noter que la suspension susmentionnée provient de papiers ou cartons déchiquetés ou autres déchets cellulosiques tels que sciure, écorce, paille, fibres végétales éventuellement, ou déchets plastiques.

Suivant une autre caractéristique de l'invention, des boues primaires et des boues mélangées de papeterie peuvent être ajoutées à la suspension cellulosique.

Pour exemple, le sel métallique trivalent est du sulfate d'aluminium ajouté dans la proportion stoechiométrique de préférence 1 mole de sel pour 6 moles de chaux afin d'aboutir à **la formation de ligno-cellulo-sulfoaluminate de calcium, non connu encore à ce jour.**

Suivant un autre exemple, le sel métallique monovalent est du carbonate monosodique ou disodique ajouté dans la proportion stoechiométrique de 1 mole de sel pour 1 mole de chaux afin d'aboutir **à la formation de ligno-cellulo-carbonate alcalin, non connu encore à ce jour.**

L'invention est représentée à titre d'exemple non limitatif sur les dessins ci-joints dans lesquels :

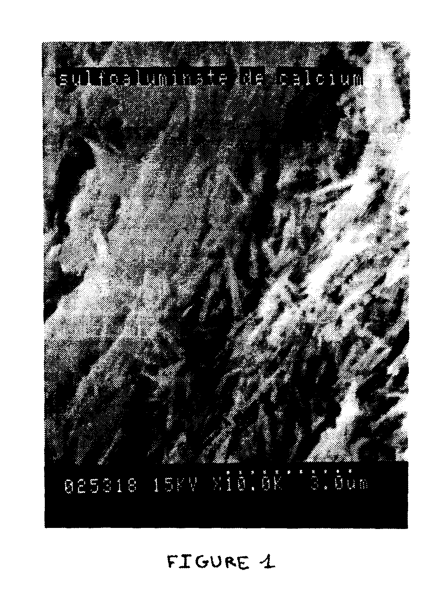

- **la figure 1** représente, après agrandissement de 9800 fois, la photographie en microscopie électronique d'un matériau obtenu par mélange d'un sulfo-aluminate de calcium ou ettringite sur des fibres de cellulose. Ce mélange donne des paillettes diffuses, réparties de façon anisotrope sans liaison cohésive entre elles.

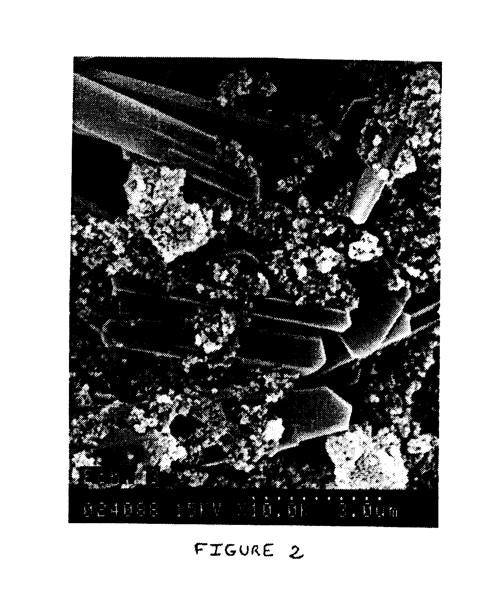

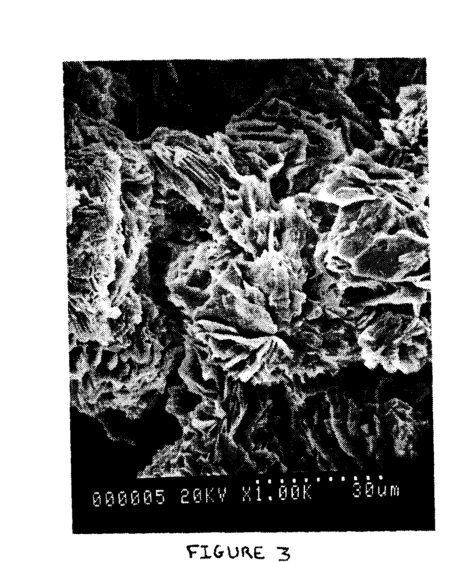

- **la figure 2** représente, après un même agrandissement, le ligno-cellulo-sulfoaluminate de calcium obtenu conformément à l'invention. Cette structure cristalline se présente sous forme d'aiguilles encerclant de fines particules de chaux n'ayant pas réagi. Ces aiguilles ont une longueur de 6-7 microns et une largeur de 1-2 microns. Ces cristaux ont une structure rhomboédrique et ne sauraient être assimilés aux paillettes de la Figure 1, non traitées. De plus, ces aiguilles sont structurées en lamelles superposées et entrecroisées donnant une cohésion accrue. Ces cristaux ne sauraient être assimilés à des cristaux de gypse, connus pour être représentés en "fer de lance".

La présente invention a pour conséquence la réalisation d'un matériau de construction et d'ameublement, d'une très grande dureté, ignifuge, léger, isolant phonique et thermique. Il est imputrescible et se conserve parfaitement dans le temps même à l'état d'une pâte plastique pouvant être extrudée ou injectée dans un moule. Ainsi, le matériau réalisé à partir de cette pâte peut être moulé, scié, percé, teinté de manière simple pour aboutir à la réalisation de plaques, panneaux, carreaux, profilés, briques, ... pouvant valablement être mis en oeuvre en tant que matériau de construction et d'ameublement.

Le procédé de l'invention met en oeuvre de la fibre de papier issue de préférence de déchets de papiers encrés ou non, de cartons usagés ou autre déchets cellulosiques ou plastiques, qui sont déchiquetés et désintégrés dans un broyeur ou un pulpeur de façon à former une suspension fibreuse, dans l'eau appelée solution I, comprenant de 5 à 30 % de fibres et de degré Schopper entre 20 et 1000 de préférence. Ces fibres peuvent être remplacées en tout ou partie par des boues primaires ou boues mélangées de papeterie.

Cette solution I est introduite dans un réacteur muni de préférence d'une grande pale d'agitation, dans lequel on introduit, à température ambiante, la quantité prévue de Ca $(OH)_2$ ou CaO, pour obtenir un rapport alcali/sel métallique conforme à l'invention et tout en maintenant l'agitation.

Cette agitation est poursuivie de 10 à 15 mn après introduction de la chaux de façon que celle-ci réagisse complètement sur la fibre cellulosique afin d'obtenir des liaisons physico-chimiques très stables de nature alcalino-cellulosique, appelées solution II.

Il est ensuite prévu d'ajouter à la solution II au moins un sulfate d'ion métallique mono ou trivalent dans une proportion stoechiométrique conduisant, par action sur la chaux, à l'obtention de sels alcalino-terreux de nature complexe sans excédent notable de ce sel métallique, appelé solution III.

Ainsi, dans le cas où le sel métallique trivalent est du sulfate d'aluminium, ce dernier est ajouté, sous agitation, dans la proportion stoechiométrique de 1 mole de sel pour 6 moles de chaux éteinte afin d'aboutir à la formation d'un ligno-cellulo-sulfoaluminate de calcium, c'est à dire un sel alcalino-terreux insoluble. Ainsi, les quantités de réactifs suivantes pourront être utilisés :

| | |
|---|---|
| Vieux papiers et/ou cartons et autres déchets et/ou boues primaires de papeterie (a) | 250 Kgs en matière active |
| Chaux éteinte en poudre | 300 Kgs |
| Sulfate Aluminium $Al_2(SO_4)_3$, 14 $H_2O$ | 450 Kgs |

Le poids de Chaux + Sulfate d'Aluminium peut varier dans un rapport de 2 à 4 en comparaison des constituants (a).

La proportion des 3 constituants (a) et la composition ultime sera idéalement choisie en fonction des caractéristiques finales désirées pour le matériau.

Après filtration de la solution III, on obtient une pâte plastique, consistante et cohésive, susceptible d'être compactée, moulée de façon à réaliser l'élément de construction ou d'ameublement de forme et dimensions désirées possédant les caractéristiques physiques précédemment indiquées.

Ce matériau de construction peut comporter jusqu'à 50% de fibres cellulosiques du produit obtenu sec. Sa densité sera comprise entre 400 et 800 Kgs/M$^3$.

La solution de sulfate d'aluminium est préparée dans un mélangeur avec une concentration voisine de la saturation en sel dans l'eau ; par exemple à 40 % en poids. Le pH de cette solution est de 2,5 plus ou moins 0,1 ; sa densité est de 1,25 plus ou moins 0,05. Cette solution est ensuite introduite dans le réacteur en un temps suffisamment court, par exemple **en moins de deux minutes** par réaction sur la chaux et la ligno-cellulose, pour donner ce nouveau produit, suivant la réaction :

Lignocellulose + 6 Ca $(OH)_2$ + $Al_2$ $(SO_4)_3$, 14 $H_2O$ + 13 $H_2O$ → ligno-cellulo-sulfoaluminate de calcium - soit ligno-cellulo-3 CaO, $Al_2O_3$, 3 $CaSO_4$, 33 $H_2O$)

Cette réaction est poursuivie pendant 10 à 15 minutes.

Cette réaction, réalisée de façon à mettre en oeuvre 1 mole de sulfate d'aluminium pour 6 moles de chaux, permet d'aboutir au matériau représenté sur la figure 2 ci-jointe après un agrandissement de 9800 fois. On peut constater les différences de structure de ce matériau avec celui représenté sur la figure 1, obtenu par le mélange d'un sulfo-aluminate de calcium sur des fibres, c'est à dire sur des fibres non préalablement délitées et traitées par la chaux.

Cette réaction est conduite dans des proportions de 1 pour 6 étant donné que le sulfate d'aluminium est trivalent, ce qui permet d'aboutir à ce ligno-cellulo-sulfoaluminate de calcium et non pas à un sulfate de calcium comme on l'obtiendrait si cette proportion n'était pas, pour l'essentiel, respectée.

On remarque en effet sur la figure 2 que le procédé de l'invention conduit à des complexes lignocellulosiques très stables à structure aiguilles et fibres enchevêtrées constituant un véritable ciment minéral. De façon surprenante, on s'est aperçu que les ligno-cellulo-sulfoaluminate de calcium ou ligno-cellulo-carbonate de calcium possédaient de très bonnes propriétés pour constituer des matériaux de construction ou d'ameublement.

Selon une variante de la présente invention, si les proportions de sulfate d'aluminium et de chaux ne sont pas respectées, on aboutit à un sulfate de calcium qui présente des caractéristiques physiques moindres permettant de l'utiliser valablement comme matériau de construction. Dans ce cas, le procédé peut être utilisé en ajoutant à la solution III, non identifiée alors comme un ligno-cellulo-sulfoaluminate de calcium ou autres sels alcalins, un agent renforçant type silice, silicate alcalin résines acryliques, vinyliques ou copolymères butadiène-styrène dans les proportions suivantes:

| | |
|---|---|
| Vieux papiers/cartons/ boues (ou autres déchets) | 250 Kgs |
| Chaux éteinte | 300 Kgs |
| Sulfate métallique | 100 à 600 Kgs |
| Agent renforçant | 1 à 10 % par rapport au mélange chaux sulfate. |

Le poids des produits minéraux de traitement est compris entre 2 et 4 fois le poids des produits traités organiques. Cela permet d'aboutir à un matériau de construction ou d'ameublement possédant des propriétés mécaniques satisfaisantes.

La suspension pâteuse obtenue conformément à l'invention et représentée sur la figure 2, présente un pH égale à 7,9 ; mais celui-ci peut aller, suivant les rapports des différents constituants du procédé chimique de 7,5 à 9,5. Elle a une densité de 1,0-1,1 et une concentration en matière active de 15%, pouvant aller jusqu'à 50 % suivant la composition en fibres.

Suivant une variante de l'invention, un barbotage de gaz carbonique à faible débit est réalisé dans un réacteur muni d'une buse de dégazage contenant la solution II suivant la réaction :

$$\text{lignocellulose} + Ca^{2+}, 2\ OH^{-} + 2\ H^{+} + CO_3^{2-} \rightarrow \text{lignocellulose-}CaCO_3 + 2H_2O$$

De cette façon, les fibres lignocellulosiques sont enrobées de cristaux de carbonate de calcium (type aragonite ou calcite) conduisant à une structure très stable et de grande cohésion.

Suivant une autre variante, le sel métallique mis en oeuvre au lieu d'être trivalent est monovalent comme le carbonate de sodium ; ce dernier est ajouté dans la proportion stoechiométrique de 1 mole de sel pour 1 mole de chaux afin d'obtenir la formation d'un ligno-cellulo-carbonate alcalin.

Dans ce cas, la solution de carbonate de sodium est préparée dans un mélangeur à la concentration de 40% dans l'eau et, elle est introduite dans le réacteur contenant la solution II. Il se produit alors la réaction suivante :

$$\text{Lignocellulose} + Na_2CO_3 + Ca\ (OH)_2 \rightarrow \text{Lignocellulose-}CaCO_3 + 2\ NaOH$$

Suivant une autre variante de l'invention, un sulfate métallique trivalent comme le sulfate d'alumine peut être ajouté à la solution I, puis est additionné un carbonate monosodique ou hydrogéno-carbonate de sodium dans la proportion de 1 mole de sulfate d'alumine pour 6 moles de carbonate monosodique suivant la réaction :

$$\text{Ligno-cellulose} + 6\ NaHCO_3 + Al_2(SO_4)_3 \rightarrow \text{Ligno-cellulose}, 3\ Na_2SO_4, Al_2O_3 + 6\ CO_2 + 3\ H_2O$$

Cette réaction permet d'obtenir un nouveau produit expansé et de très faible densité par suite du dégagement de gaz carbonique lors de la réaction. Ce produit apparaît en microscopie électronique à balayage de champ sous forme de cristaux pouvant être décrits sous forme d'une organisation en "rose des sables" tels qu'ils sont représentés à la **Figure III.**

Dans tous les mélanges pâteux obtenus par les différents processus réactionnels décrits ci-dessus, il peut être ajouté, suivant l'invention, en fin de réaction des colorants type oxydes métalliques ou organiques, des hydrofuges de masse type silicones par exemple, des agents de renforcement type acryliques ou vinyliques, des colles organiques, des émulsions. Ces additions sont faites en fonction des qualités souhaitées pour le matériau final ; cela est possible, grâce à la souplesse de mise en oeuvre du procédé chimique de la présente invention

La suspension fibreuse obtenue, qu'il s'agisse d'un ligno-cellulo-sulfoaluminate de calcium ou d'un autre sel métallique alcalin, est ensuite filtrée sur une toile métallique ou compactée entre des cylindres permettant d'obtenir une réduction d'eau de 80-85 % à 50-60 %. La pâte obtenue très consistante et très cohésive, est alors introduite - suivant les applications - dans une presse-compacteur ou une extrudeuse ou dans un train de laminoir qui permet d'avoir une production en continu et de diminuer les coûts de fabrication. La vitesse de défilement du train de laminoir peut varier de 2 à 20 m/mn. De cette façon, après la sortie du filtre-presse, la pâte est étalée sur une toile perforée en plastique, défilant entre une série de plusieurs cylindres disposés les uns au-dessus des autres et entre lesquels se trouvent des caisses aspirantes sous vide. L'ensemble de ces éléments est destiné à compacter et extirper l'eau encore contenue dans la pâte et à mouler celle-ci suivant les épaisseurs et les dimensions du matériau final désiré. Enfin, la pâte densifiée pénètre, entre une deuxième série de cylindres, dans un tunnel alimenté par de l'air chaud à 70- 80 ° C. A la sortie de celui-ci, le matériau a son aspect définitif : plaques, panneaux à densité moyenne ( par exemple de 500 à 1000 KG/M3) ou faible densité ( par exemple de 100 à 500 KG/M3), profilés,... pouvant être découpés aux dimensions suivantes :

- épaisseur de 4 à 60 mm

- largeur de 200 à 400 mm

- longueur de 300 à 4000 mm

Les caractéristiques de ces différents matériaux peuvent être données à titre d'exemple :

- densité de 100 à 1000 Kg /$M^3$

- Résistance à la compression     : 3 à 5 MPa

- Résistance à la flexion     : 2 à 4 MPa

- Résistance au feu     : classé M0

- Coefficient d'atténuation phonique     : 30 à 50 dBa.

Les matériaux issus de ce procédé sont très diversifiés et conduisent à des prix de revient de fabrication, très inférieurs à ceux des matériaux existants dans les activités du Bâtiment et de l'Ameublement, en raison du faible côut matières des produits mis en oeuvre dans la réaction chimique.

Les proportions de chaux et de sel métallique mono ou trivalent sont idéalement établies en fonction de leur valence, c'est-à-dire : 1 mole de sel pour 6 moles d'alcali dans le cas du sulfate d'aluminium, 1 mole de carbonate de sodium pour 1 mole de chaux, 1 mole de sulfate de sodium pour 1 mole de chaux, 1 mole de sulfate de potassium pour 1 mole de chaux, 6 moles de carbonate monosodique pour 1 mole de sulfate d'Aluminium. Cependant, les proportions réelles mises en oeuvre peuvent s'écarter légèrement de ces proportions idéales. Ainsi, par exemple, si la quantité de sulfate d'aluminium s'écarte du rapport de 1 mole de sel pour 6 moles de chaux, on obtiendra, pour l'excédent, la production de sulfate de chaux alors que dans le cas de la mise en oeuvre de sulfate de sodium, il ne conviendra pas de dépasser le rapport de 1 pour 1 sous peine d'aboutir à la production de soude pour l'excédent.

## Revendications

1. Procédé pour la fabrication d'un matériau de construction ou d'ameublement, caractérisé en ce qu'il consiste à réaliser une suspension de fibres de cellulose, de déchets cellulosiques ou de boues primaires de papeterie dans de l'eau ; à mélanger à cette suspension de la chaux ; à y ajouter une solution d'au moins un sel de métal mono ou trivalent ; puis à filtrer et sécher la suspension résultante pour obtenir le matériau de construction ou d'ameublement.

2. Procédé selon la revendication 1, caractérisé en ce que le sel de métal trivalent est le sulfate d'aluminium ajouté dans la proportion de 1 mole de sel pour 6 moles de chaux pour aboutir à la formation de ligno-cellulo-sulfoaluminate de calcium.

3. Procédé selon la revendication 1, caractérisé en ce que le sel de métal monovalent est le carbonate de sodium ajouté dans la proportion de 1 mole de sel pour une mole de chaux pour aboutir à un ligno-cellulo-carbonate de calcium.

4. Procédé selon la revendication 1, caractérisé en ce que le sel de métal trivalent est le sulfate d'aluminium et en ce qu'il comprend en outre l'addition d'un agent renforçant.

5. Procédé selon la revendication 4, caractérisé en ce que l'agent renforçant est choisi dans le groupe constitué par la silice, un silicate alcalin, une résine acrylique, une résine vinylique et un copolymère de butadiène-styrène.

6. Procédé pour la fabrication d'un matériau de construction ou d'ameublement, caractérisé en ce qu'il consiste à réaliser une suspension de fibres de cellulose, de déchets cellulosiques ou de boues primaires de papeterie dans de l'eau ; à y ajouter un sulfate de métal trivalent puis du carbonate monosodique ; puis à filtrer et sécher la suspension résultante pour obtenir le matériau de construction ou d'ameublement.

7. Procédé selon la revendication 6, caractérisé en ce que le sulfate de métal trivalent est le sulfate d'aluminium.

8. Procédé selon la revendication 6 ou 7, caractérisé en ce que le rapport en moles du carbonate monosodique au sel de métal trivalent est 6 : 1 pour aboutir à la formation d'un ligno-cellulo-sulfoaluminate de sodium.

9. Matériau de construction et d'ameublement obtenu par le procédé selon l'une quelconque des revendications 1 à 8, ayant de bonnes propriétés mécaniques, ignifuges et d'isolation thermique et phonique.

## Claims

1. Process for the manufacture of a building or furnishing material, characterised in that it consists in producing a suspension of cellulose fibres, cellulose waste or primary pulp sludge in water, mixing lime with this suspension, adding a solution of at least one monovalent or trivalent metal salt thereto, then filtering and drying the resulting suspension in order to obtain the building or furnishing material.

2. Process according to claim 1, characterised in that the trivalent metal salt is aluminium sulphate added in a ratio of 1 mole of salt to 6 moles of lime, resulting in the formation of calcium ligno-cellulo-sulphoaluminate.

3. Process according to claim 1, characterised in that the monovalent metal salt is sodium carbonate added in a ratio of 1 mole of salt to one mole of lime, resulting in a calcium ligno-cellulo-carbonate.

4. Process according to claim 1, characterised in that the trivalent metal salt is aluminium sulphate and in that it moreover comprises the addition of a reinforcing agent.

5. Process according to claim 4, characterised in that the reinforcing agent is selected from the group consisting of silica, an alkali silicate, an acrylic resin, a vinyl resin and a butadiene-styrene copolymer.

6. Process for the manufacture of a building or furnishing material, characterised in that it consists in producing a suspension of cellulose fibres, cellulose waste or primary pulp sludge in water, adding a trivalent metal sulphate then monosodium carbonate thereto, then filtering and drying the resulting suspension in order to obtain the building or furnishing material.

7. Process according to claim 6, characterised in that the trivalent metal sulphate is aluminium sulphate

8. Process according to claim 6 or claim 7, characterised in that the mole ratio of monosodium carbonate to trivalent metal salt is 6:1, resulting in the formation of a sodium ligno-cellulo-sulphoaluminate.

9. Building and furnishing material obtained by the process according to any one of claims 1 to 8, having good mechanical, flame-retardant and thermal and sound insulating properties.

**Patentansprüche**

1. Verfahren zur Herstellung eines Baustoffs oder Möbelwerkstoffs, dadurch gekennzeichnet, daß es darin besteht, eine Suspension von Cellulosefasern, von cellulosischen Abfällen oder von Primärschlämmen der Papierherstellung in Wasser herzustellen, dieser Suspension Kalk beizumischen, hierzu eine Lösung von mindestens einem Salz eines ein- oder dreiwertigen Metalls zu geben, dann die gebildete Suspension zu filtrieren und zu trocknen, um den Baustoff oder Möbelwerkstoff zu erhalten.

2. Verfahren nach Anspruch 1, dadurch gekennzeichnet, daß das Salz des dreiwertigen Metalls Aluminiumsulfat ist, das im Verhältnis von 1 Mol Salz auf 6 Mole Kalk hinzugefügt wird, um zur Bildung von Calcium-ligno-cellulo-sulfoaluminat zu führen.

3. Verfahren nach Anspruch 1, dadurch gekennzeichnet, daß das Salz des einwertigen Metalls Natriumcarbonat ist, das im Verhältnis von 1 Mol Salz auf 1 Mol Kalk hinzugefügt wird, um zu einem Calcium-ligno-cellulo-carbonat zu führen.

4. Verfahren nach Anspruch 1, dadurch gekennzeichnet, daß das Salz des dreiwertigen Metalls Aluminiumsulfat ist und daß es ferner die Zugabe eines Verstärkungsmittels umfaßt.

5. Verfahren nach Anspruch 4, dadurch gekennzeichnet, daß das Verstärkungsmittel in der von Siliciumdioxid, einem Alkalisilicat, einem Acrylharz, einem Vinylharz und einem Butadien-Styrol-Copolymer gebildeten Gruppe gewählt wird.

6. Verfahren zur Herstellung eines Baustoffs oder Möbelwerkstoffs, dadurch gekennzeichnet, daß es darin besteht, eine Suspension von Cellulosefasern, von cellulosischen Abfällen oder von Primärschlämmen der Papierherstellung in Wasser herzustellen, hierzu ein Sulfat eines dreiwertigen Metalls und dann Natriumhydrogencarbonat zu geben, dann die gebildete Suspension zu filtrieren und zu trocknen, um den Baustoff oder Möbelwerkstoff zu erhalten.

7. Verfahren nach Anspruch 6, dadurch gekennzeichnet, daß das Sulfat des dreiwertigen Metalls Aluminiumsulfat ist.

8. Verfahren nach Anspruch 6 oder 7, dadurch gekennzeichnet, daß das Molverhältnis von Natriumhydrogencarbonat zu dem Sulfat des dreiwertigen Metalls 6:1 beträgt, um zur Bildung eines Natrium-ligno-cellulo-sulfoaluminats zu führen.

9. Baustoff und Möbelwerkstoff, erhalten durch das Verfahren nach einem der Ansprüche 1 bis 8, der gute mechanische, feuerfeste, wärme- und schalldämmende Eigenschaften besitzt.

FIGURE 1

FIGURE 2

000005 20KV X1:00K 30um

FIGURE 3